(19) Europäisches Patentamt
European Patent Office
Office européen des brevets

(11) **EP 3 454 400 A1**

(12) **EUROPEAN PATENT APPLICATION**
published in accordance with Art. 153(4) EPC

(43) Date of publication:
**13.03.2019 Bulletin 2019/11**

(51) Int Cl.:
*H01M 4/587* (2010.01)    *C01B 32/20* (2017.01)
*H01M 4/133* (2010.01)    *H01M 4/36* (2006.01)
*H01M 10/0525* (2010.01)    *H01M 10/0566* (2010.01)

(21) Application number: 17792752.2

(22) Date of filing: 28.04.2017

(86) International application number:
**PCT/JP2017/017101**

(87) International publication number:
**WO 2017/191820 (09.11.2017 Gazette 2017/45)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: 02.05.2016 JP 2016092585

(71) Applicant: Hitachi Chemical Company, Ltd.
Chiyoda-ku
Tokyo 100-6606 (JP)

(72) Inventors:
• **SATOH, Tsutomu**
Tokyo 100-6606 (JP)

• **TSUCHIYA, Hideyuki**
Tokyo 100-6606 (JP)
• **ISAKA, Motohiro**
Tokyo 100-6606 (JP)
• **HOSHI, Kento**
Tokyo 100-6606 (JP)
• **SUGA, Keita**
Tokyo 100-6606 (JP)
• **UCHIYAMA, Yoshinori**
Tokyo 100-6606 (JP)

(74) Representative: **Beckmann, Claus**
Kraus & Weisert
Patentanwälte PartGmbB
Thomas-Wimmer-Ring 15
80539 München (DE)

(54) **NEGATIVE ELECTRODE MATERIAL FOR LITHIUM ION SECONDARY CELL, METHOD FOR MANUFACTURING NEGATIVE ELECTRODE MATERIAL FOR LITHIUM ION SECONDARY CELL, NEGATIVE ELECTRODE FOR LITHIUM ION SECONDARY CELL, AND LITHIUM ION SECONDARY CELL**

(57)    Provided is an anode material for a lithium ion secondary battery, which the anode material satisfies at least one of the following (1) or (2). (1) The anode material includes: a first carbon material as a core; and a second carbon material present on at least a part of a surface of the first carbon material, and having a crystallinity lower than the crystallinity of the first carbon material; and the anode material has at least two peaks within the range of from 395 eV to 405 eV in an X-ray photoelectron spectrum thereof. (2) The anode material has an R value of from 0.1 to 1.0, and has at least two peaks within the range of from 395 eV to 405 eV in an X-ray photoelectron spectrum thereof.

FIG.1

## Description

Technical Field

The present invention relates to an anode material for a lithium ion secondary battery, a method of producing the anode material for a lithium ion secondary battery, an anode for a lithium ion secondary battery, and a lithium ion secondary battery.

Background Art

Lithium ion secondary batteries have been conventionally and widely used in electronic devices, such as notebook PCs, mobile phones, smartphones, and Tablet PCs, taking advantage of being compact and lightweight, as well as having a high energy density. With growing concerns about environmental issues such as global warming due to $CO_2$ emissions, in recent years, clean electric vehicles (EVs) which run solely on batteries, hybrid electric vehicles (HEVs) in which gasoline engines and batteries are combined, and the like are gaining popularity. Lithium ion secondary batteries are now also used for electric power storage, and their applications are expanding into various fields.

The performance of anode materials in lithium ion secondary batteries has great impact on output characteristics of the batteries. As materials for anode materials for lithium ion secondary batteries, carbon materials are widely used. Carbon materials used for anode materials are broadly divided into graphite, and carbon materials (amorphous carbon or the like) having a lower crystallinity than a crystallinity of graphite. Graphite has a structure in which hexagonal network planes composed of carbon atoms are regularly layered one on another, and in a case of being used for an anode material in a lithium ion secondary battery, intercalation and deintercalation of lithium ions take place at the edges of the hexagonal network planes, to perform charging and discharging.

Amorphous carbon has a structure in which hexagonal network planes are irregularly layered, or do not have a hexagonal network plane. Accordingly, in an anode material using amorphous carbon, the intercalation and deintercalation of lithium ions take place over an entire surface of the anode material. Therefore, a lithium ion battery having excellent output characteristics tends to be obtained, as compared to the case of using graphite for an anode material (see, for example, Patent Document 1 and Patent Document 2). However, since amorphous carbon has a crystallinity lower than the crystallinity of graphite, the amorphous carbon has a lower energy density than that of graphite.

Related Art Documents

Patent Documents

Patent Document 1: Japanese Patent Application Laid-Open (JP-A) No. H04-370662
Patent Document 2: JP-A No. H05-307956

SUMMARY OF INVENTION

Technical Problem

Taking into consideration the characteristics of carbon materials as described above, an anode material has also been proposed in which: amorphous carbon and graphite are combined into a composite to enhance output characteristics while retaining a high energy density; and the graphite is covered by the amorphous carbon to reduce surface reactivity, and to enhance output characteristics while favorably retaining initial charge-discharge efficiency. However, in view of the above described background, an anode material is needed which allows for achieving a further improvement in output characteristics of a lithium ion secondary battery. In addition, high temperature storage characteristics are also demanded in a lithium ion secondary battery for a vehicle, such as an EV or an HEV.

In view of the above described problems, an object of the present invention is to provide an anode material for a lithium ion secondary battery, a method of producing the anode material for a lithium ion secondary battery, an anode for a lithium ion secondary battery, and a lithium ion secondary battery, which allow for the production of a lithium ion secondary battery having excellent output characteristics and high temperature storage characteristics.

Solution to Problem

The means for solving the above described problems include the following embodiments.

<1> An anode material for a lithium ion secondary battery, the anode material including:

a first carbon material as a core; and
a second carbon material present on at least a part of a surface of the first carbon material, and having a crystallinity lower than a crystallinity of the first carbon material;
wherein the anode material has at least two peaks within a range of from 395 eV to 405 eV in an X-ray photoelectron spectrum thereof.

<2> An anode material for a lithium ion secondary battery, wherein the anode material has an R value of from 0.1 to 1.0, and has at least two peaks within a range of from 395 eV to 405 eV in an X-ray photoelectron spectrum thereof.
<3> The anode material for a lithium ion secondary battery according to <1> or <2>, wherein the at least two peaks include a peak within a range of 395 eV or more but less than 400 eV, and a peak within a range of from 400 eV to 405 eV.
<4> The anode material for a lithium ion secondary battery according to any one of <1> to <3>, wherein the at least two peaks include a peak in a vicinity of 398 eV, and a peak in a vicinity of 401 eV.
<5> The anode material for a lithium ion secondary battery according to any one of <1> to <4>, wherein a peak intensity ratio (A/B) of a peak intensity of a peak A to a peak intensity of a peak B is from 0.1 to 10, wherein the peak A is a peak closer to 395 eV, and the peak B is a peak closer to 405 eV, of a peak having a maximum intensity and a peak having a second maximum intensity, among the peaks present within the range of from 395 eV to 405 eV in the X-ray photoelectron spectrum.
<6> An anode material for a lithium ion secondary battery, wherein the anode material includes bonds between carbon atoms and nitrogen atoms, and the carbon atoms and the nitrogen atoms are bonded in two or more types of bonding states.
<7> The anode material for a lithium ion secondary battery according to <6>, wherein the anode material includes a nitrogen atom bonded to three carbon atoms and a nitrogen atom bonded to two carbon atoms.
<8> The anode material for a lithium ion secondary battery according to any one of <1> to <7>, wherein the anode material has a content of nitrogen atoms of 0.2% by mass or more.
<9> The anode material for a lithium ion secondary battery according to any one of <1> to <8>, wherein the anode material has an average interplanar spacing ($d_{002}$), as measured by X-ray diffractometry, of 0.340 nm or less.
<10> The anode material for a lithium ion secondary battery according to any one of <1> to <9>, wherein the anode material has a volume average particle size ($D_{50}$) of from 1 $\mu$m to 40 $\mu$m.
<11> The anode material for a lithium ion secondary battery according to any one of <1> to <10>, wherein the anode material has a specific surface area, as measured by nitrogen adsorption at 77 K, of from 0.5 $m^2$/g to 10 $m^2$/g.
<12> A method of producing the anode material for a lithium ion secondary battery according to any one of <1> to <11>, the method including subjecting a mixture containing: the first carbon material as a core; a precursor of the second carbon material having the crystallinity lower than the crystallinity of the first carbon material; and a nitrogen source, to a heat treatment.
<13> The method of producing the anode material for a lithium ion secondary battery according to <12>, wherein the nitrogen source is contained in the mixture in such an amount that a content of nitrogen atoms in the anode material for a lithium ion secondary battery is 0.2% by mass or more.
<14> The method of producing the anode material for a lithium ion secondary battery according to <12> or <13>, wherein the first carbon material and the precursor of the second carbon material are contained in the mixture in such amounts that a proportion of the second carbon material in a total mass of the anode material for a lithium ion secondary battery is from 0.1% by mass to 30% by mass.
<15> The method of producing the anode material for a lithium ion secondary battery according to any one of <12> to <14>, wherein the heat treatment is carried out at a temperature of from 700°C to 1,500°C.
<16> An anode for a lithium ion secondary battery, the anode including:

an anode material layer containing the anode material for a lithium ion secondary battery according to any one of <1> to <11>; and
a current collector.

<17> A lithium ion secondary battery, including:

the anode for a lithium ion secondary battery according to <16>;
a cathode; and
an electrolyte solution.

Advantageous Effects of Invention

According to the present invention, an anode material for a lithium ion secondary battery, a method of producing the anode material for a lithium ion secondary battery, an anode for a lithium ion secondary battery, and a lithium ion secondary battery are provided, which allow for the production of a lithium ion secondary battery having excellent output characteristics and high temperature storage characteristics.

BRIEF DESCRIPTION OF DRAWING

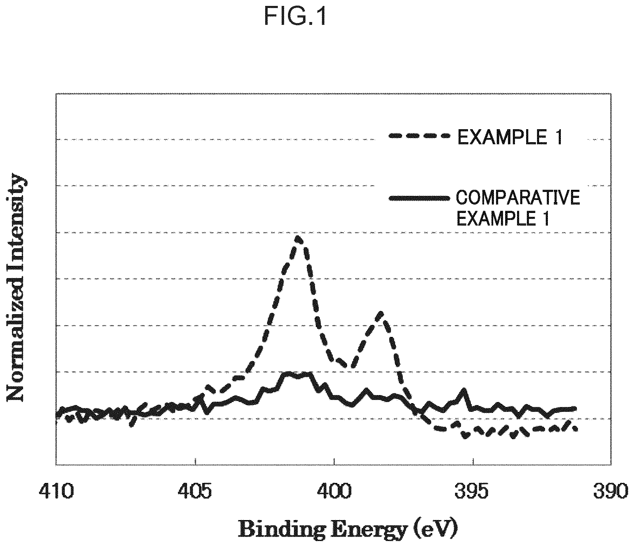

FIG. 1 shows X-ray photoelectron spectra obtained by XPS (X-ray Photoelectron Spectroscopy) analysis of anode materials for a lithium ion secondary battery, prepared in Example 1 and Comparative Example 1.

DESCRIPTION OF EMBODIMENTS

Embodiments of the present invention will now be described in detail. It is to be noted, however, that the present invention is not limited to the following embodiments. In the embodiments described below, components thereof (including element steps and the like) are not essential, unless otherwise specified. The same applies for numerical values and ranges thereof, and the present invention is not limited thereto.
In the present specification, the term "step" includes not only a step which is independent from another step, but also a step which is not clearly distinguishable from another step, as long as a purpose of the step can be achieved.
In the present specification, any numerical range indicated using an expression "to" includes numerical values described before and after "to" as a minimum value and a maximum value, respectively. In a numerical range described in stepwise, in the present specification, the upper limit value or the lower limit value described in one numerical range may be replaced with the upper limit value or the lower limit value in another numerical range described in stepwise. Further, in a numerical range described in the present specification, the upper limit value or the lower limit value described in the numerical range may be replaced with a value shown in Examples.
In the present specification, in a case in which a plural kinds of substances corresponding to each component are present in a composition, a content or an amount contained of each component in the composition refers to, unless otherwise specified, the content or the amount contained of the total of the plural kinds of substances present in the composition.
In the present specification, in a case in which a plural kinds of particles corresponding to each component are present in a composition, the particle size of each component in the composition refers to, unless otherwise specified, the value of a mixture of the plural kinds of the particles present in the composition.

< Anode Material for Lithium Ion Secondary Battery >

An anode material for a lithium ion secondary battery according to a present embodiment (hereinafter, also simply referred to as "anode material") satisfies at least one of the following conditions (1) or (2).

(1) The anode material includes: a first carbon material as a core; and a second carbon material present on at least a part of a surface of the first carbon material, and having a crystallinity lower than a crystallinity of the first carbon material; in which the anode material has at least two peaks within a range of from 395 eV to 405 eV in an X-ray photoelectron spectrum thereof.
(2) The anode material has an R value, as measured by Raman spectroscopy, of from 0.1 to 1.0, and has at least two peaks within a range of from 395 eV to 405 eV in an X-ray photoelectron spectrum thereof.

The present inventors have found out, as result of investigation, that a lithium ion secondary battery using an anode material which has at least two peaks within the range of from 395 eV to 405 eV in an X-ray photoelectron spectrum thereof, has excellent output characteristics while retaining a high temperature storage characteristics, as compared to a lithium ion secondary battery using an anode material which does not have at least two peaks within the range of from 395 eV to 405 eV in an X-ray photoelectron spectrum thereof. The reason for this is not clear, but it is thought to be because, changes in electron density occurring in a vicinity of edges of hexagonal network planes of carbon atoms in the anode material, lead to changes in a product generated by a reaction between an electrolyte solution and a surface of the anode material.
An X-ray photoelectron spectrum in the present invention can be measured by X-ray Photoelectron Spectroscopy (XPS). The measurement can be carried out using "VERSA PROBE II" manufactured by ULVAC-PHI, Inc., under measurement conditions shown in Examples to be described later.
The fact that "the anode material has at least two peaks within a range of from 395 eV to 405 eV in an X-ray photoelectron spectrum thereof' means that the anode material includes bonds between carbon atoms and nitrogen atoms, and the carbon atoms and the nitrogen atoms are bonded in two or more types of bonding states. In other words, the anode material according to the present embodiment includes bonds between carbon atoms and nitrogen atoms, and the carbon atoms and the nitrogen atoms are bonded in two or more types of bonding states.

It is preferable that the anode material according to the present embodiment has at least two peaks within the range of from 395 eV to 405 eV in an X-ray photoelectron spectrum thereof, and that the at least two peaks include a peak within a range of 395 eV or more but less than 400 eV, and a peak within a range of from 400 eV to 405 eV.

From the viewpoint of high temperature storage characteristics, it is preferable, in the anode material according to the present embodiment, that a peak intensity ratio (A/B) of a peak intensity of a peak A to a peak intensity of a peak B is from 0.1 to 10, in which the peak A is a peak closer to 395 eV, and the peak B is a peak closer to 405 eV, of a peak having a maximum intensity and a peak having a second maximum intensity, among the peaks present within the range of from 395 eV to 405 eV in the X-ray photoelectron spectrum.

It is more preferable that the anode material has at least one peak within each of the range of 395 eV or more but less than 400 eV, and the range of from 400 eV to 405 eV, in the X-ray photoelectron spectrum, and that a peak intensity ratio (A'/B') of a peak intensity of a peak A' to a peak intensity of a peak B' is from 0.1 to 10, in which the peak A' is a peak having the maximum intensity within the range of 395 eV or more but less than 400 eV, and the peak B' is a peak having the maximum intensity within the range of from 400 eV to 405 eV.

From the viewpoint of obtaining a lithium ion secondary battery having a better balance in the state of electrons, and having superior input/output characteristics and battery life, the peak intensity ratio (A/B or A'/B') is more preferably from 0.3 to 3, and still more preferably from 0.5 to 2.

In a certain embodiment of the present embodiments, the anode material contains a nitrogen atom (graphite-type) bonded to three carbon atoms, and a nitrogen atom (pyridine-type) bonded to two carbon atoms. Whether or not the anode material contains a nitrogen atom bonded to three carbon atoms can be confirmed by, for example, confirming whether or not a peak is present in a vicinity of 401 eV in the X-ray photoelectron spectrum. Whether or not the anode material contains a nitrogen atom bonded to two carbon atoms can be confirmed by, for example, confirming whether or not a peak is present in a vicinity of 398eV in the X-ray photoelectron spectrum.

From the viewpoint of high temperature storage characteristics, it is preferable that the anode material according to the present embodiment has at least two peaks within the range of from 395 eV to 405 eV in the X-ray photoelectron spectrum, and that the at least two peaks include a peak in the vicinity of 398 eV and a peak in the vicinity of 401 eV.

In the anode material according to the present embodiment, a content of the nitrogen atoms is not particularly limited. From the viewpoint of obtaining a sufficient effect of improving high temperature storage characteristics, the content of the nitrogen atoms in the total amount of the anode material is preferably 0.2% by mass or more, and more preferably 0.3% by mass or more. From the viewpoint of adjusting a band gap between carbon-nitrogen bonds to an appropriate degree and maintaining a favorable electronic conductivity, the content of the nitrogen atoms in the total amount of the anode material is preferably 5% by mass or less, and more preferably 2% by mass or less. The content of the nitrogen atoms can be determined by an inert gas fusion-thermal conductivity method (in accordance with JIS G 1228, 2006).

In the anode material according to the present embodiment, a content of the carbon atoms is not particularly limited. From the viewpoint of preventing a decrease in capacity, the content of the carbon atoms in the total amount of the anode material is preferably 90% by mass or more, more preferably 93% by mass or more, and still more preferably 95% by mass or more. The content of carbon the atoms can be determined by the inert gas fusion-thermal conductivity method (in accordance with JIS G 1228, 2006).

A total content of the nitrogen atoms and the carbon atoms in the total amount of the anode material is preferably 92% by mass or more, more preferably 95% by mass or more, still more preferably 99% by mass or more, and particularly preferably, substantially 100% by mass, from the viewpoint of reducing side reactions during charging and discharging.

(First Carbon Material and Second Carbon Material)

In a case in which the anode material includes: a first carbon material as a core; and a second carbon material present on at least a part of a surface of the first carbon material, and having a crystallinity lower than a crystallinity of the first carbon material, the first carbon material and the second carbon material are not particularly limited, as long as a condition that the second carbon material has a crystallinity lower than a crystallinity of the first carbon material is satisfied. Specific examples of the second carbon material and the first carbon material include a carbon material, such as graphite, a low crystalline carbon, an amorphous carbon, and a mesophase carbon. Examples of the graphite include artificial graphite, natural graphite, graphitized mesophase carbon, and graphitized carbon fibers. The anode material may include one kind or two or more kinds, of each of the first carbon material and the second carbon material.

The fact that the second carbon material is present on the surface of the first carbon material can be confirmed by an observation using a transmission electron microscope.

The first carbon material preferably contains graphite, from the viewpoint of increasing charge and discharge capacities. A shape of the graphite is not particularly limited, and the graphite may be in a form of flakes, spheres, lumps, fibers, or the like. The graphite is preferably in the form of spheres, from the viewpoint of obtaining a high tap density.

The second carbon material preferably includes at least one of crystalline carbon or amorphous carbon, from the viewpoint of improving input/output characteristics. Specifically, the second carbon material is preferably at least one selected from the group consisting of: a carbonaceous substance obtainable from an organic compound (hereinafter, also referred to as a "precursor of the second carbon material") which can be transformed into a carbonaceous substance by being subjected to a heat treatment; and carbonaceous particles.

The precursor of the second carbon material is not particularly limited, and examples thereof include pitch and an organic polymer compound. Examples of the pitch include ethylene heavy end pitch, crude oil pitch, coal tar pitch, asphalt-decomposed pitch, a pitch obtained by thermal decomposition of polyvinyl chloride or the like, and a pitch obtained by polymerization of naphthalene or the like in the presence of a super acid. Examples of the organic polymer compound include: a thermoplastic resin, such as polyvinyl chloride, polyvinyl alcohol, polyvinyl acetate, and polyvinyl butyral; and a natural substance, such as starch and cellulose.

The carbonaceous particles to be used as the second carbon material are not particularly limited, and examples thereof include particles of acetylene black, oil furnace black, Ketjen Black, channel black, thermal black, and soil graphite.

Proportions of amounts of the first carbon material and the second carbon material in the anode material are not particularly limited. From the viewpoint of improving input/output characteristics, a proportion of an amount of the second carbon material in the total mass of the anode material is preferably 0.1% by mass or more, more preferably 0.5% by mass or more, and still more preferably 1% by mass or more. From the viewpoint of preventing a decrease in the capacity, the proportion of the amount of the second carbon material in the total mass of the anode material is preferably 30% by mass or less, more preferably 20% by mass or less, and still more preferably 10% by mass or less.

In a case of calculating the amount of the second carbon material in the anode material from an amount of the precursor of the second carbon material, the amount of the second carbon material can be calculated by multiplying a residual carbon rate (% by mass) of the precursor of the second carbon material, by the amount of the precursor of the second carbon material. The residual carbon rate of the precursor of the second carbon material can be obtained by: subjecting the precursor of the second carbon material alone (or a mixture of the first carbon material and the precursor of the second carbon material in predetermined proportions) to a heat treatment at a temperature at which the precursor of the second carbon material can be transformed into a carbonaceous substance; and calculating the residual carbon rate by thermogravimetry or the like, from the mass of the precursor of the second carbon material before being subjected to the heat treatment, and from the mass of the carbonaceous substance derived from the precursor of the second carbon material and obtained after the heat treatment.

The anode material preferably has an average interplanar spacing $d_{002}$, as measured by X-ray diffractometry, of 0.340 nm or less. When the anode material has an average interplanar spacing $d_{002}$ of 0.340 nm or less, the resulting lithium ion secondary battery tends to have both an excellent initial charge-discharge efficiency and an excellent energy density. A theoretical value of the average interplanar spacing $d_{002}$ of a graphite crystal is 0.3354 nm, and when the anode material has an average interplanar spacing $d_{002}$ closer to this value, the resulting lithium ion secondary battery tends to have a higher energy density.

The average interplanar spacing $d_{002}$ of the anode material can be obtained by: irradiating a sample, which is the anode material, with an X-ray (CuK alpha-ray); and calculating the average interplanar spacing using Black's formula, from a diffraction peak appearing in the vicinity of a diffraction angle $2\theta$ of from 24° to 27° and corresponding to a carbon 002 plane, in a diffraction profile obtained by measuring a diffraction line using a goniometer.

The value of the average interplanar spacing $d_{002}$ of the anode material tends to decrease by, for example, increasing a temperature of the heat treatment in the production of the anode material. Accordingly, it is possible to control the average interplanar spacing $d_{002}$ of the anode material anode material, by adjusting the temperature of the heat treatment in the production of the anode material.

(R Value as Measured by Raman Spectroscopy)

The anode material preferably has an R value, as measured by Raman spectroscopy, of from 0.1 to 1.0, more preferably from 0.2 to 0.8, and still more preferably from 0.3 to 0.7. When the anode material has an R value of 0.1 or more, there is a tendency that graphite lattice defects used for intercalation and deintercalation of lithium ions are sufficiently present, and thus a decrease in input/output characteristics are prevented. When the anode material has an R value of 1.0 or less, there is a tendency that a decomposition reaction of an electrolyte solution is sufficiently suppressed, and thus a decrease in the initial efficiency is prevented.

The R value is defined as an intensity ratio (Id/Ig) of intensity Id, which is an intensity of a maximum peak in a vicinity of 1,360 cm$^{-1}$, to intensity Ig, which is an intensity of a maximum peak in a vicinity of 1,580 cm$^{-1}$, in a Raman spectrum obtained by a Raman spectroscopy measurement. A peak(s) appearing in the vicinity of 1,580 cm$^{-1}$ refer(s)

to a peak(s) generally identified to be attributed to a crystal structure of graphite, and mean(s), for example, a peak(s) observed within a range of from 1,530 $cm^{-1}$ to 1,630 $cm^{-1}$. Further, a peak(s) appearing in the vicinity of 1,360 $cm^{-1}$ refer(s) to a peak(s) generally identified to be attributed to an amorphous structure of carbon, and mean(s), for example, a peak(s) observed within a range of from 1,300 $cm^{-1}$ to 1,400 $cm^{-1}$.

In the present specification, the Raman spectroscopy measurement is carried out, using a laser Raman spectrometer (model number: NRS-1000, manufactured by JASCO Corporation), by irradiating, with an argon laser beam, a sample plate in which the anode material for a lithium ion secondary battery is set in a flat state.
The measurement conditions are as follows.

Wavelength of argon laser beam: 532 nm
Wavenumber resolution: 2.56 $cm^{-1}$
Measurement range: from 1,180 $cm^{-1}$ to 1,730 $cm^{-1}$
Peak research: background removal

The anode material preferably has a volume average particle size ($D_{50}$) of from 1 $\mu$m to 40 $\mu$m, more preferably from 3 $\mu$m to 30 $\mu$m, and still more preferably from 5 $\mu$m to 25 $\mu$m, and particularly preferably from 5 $\mu$m to 20 $\mu$m.

When the anode material has a volume average particle size of 1 $\mu$m or more, the anode material tends to have a sufficient tap density, and to have favorable coating properties in a case of being formed into an anode material composition. When the anode material has a volume average particle size of 40 $\mu$m or less, on the other hand, there is a tendency that a diffusion length of lithium from a surface toward an interior of the anode material is prevented from being too long, and thus input/output characteristics of the resulting lithium ion secondary battery are favorably maintained.

The volume average particle size ($D_{50}$) of the anode material refers to a particle size corresponding to 50% cumulative volume, when a cumulative volume distribution curve is drawn from a smaller diameter side, based on a particle size distribution of the anode material. The volume average particle size ($D_{50}$) can be determined by, for example, dispersing the anode material in purified water containing a surfactant, and carrying out measurement using a laser diffraction particle size distribution measuring apparatus (for example, SALD-3000J, manufactured by Shimadzu Corporation).

The anode material preferably has a specific surface area, as measured by nitrogen adsorption at 77 K (hereinafter, also referred to as "$N_2$ specific surface area"), of from 0.5 $m^2$/g to 10 $m^2$/g, and more preferably from 1 $m^2$/g to 8 $m^2$/g, and still more preferably from 2 $m^2$/g to 6 $m^2$/g. When the anode material has an $N_2$ specific surface area within the above described range, the resulting lithium ion secondary battery tends to have a favorable balance between input/output characteristics and initial charge-discharge efficiency. The $N_2$ specific surface area can be determined, specifically, from an adsorption isotherm obtained by the nitrogen adsorption measurement at 77 K, using a BET (Brunauer-Emmett-Teller) method.

The anode material preferably has a circularity of 0.70 or more, more preferably 0.80 or more, still more preferably 0.85 or more, and particularly preferably 0.90 or more. When the anode material has a circularity of 0.70 or more, continuous charge acceptance tends to improve. The circularity of the anode material can be measured by a flow particle analysis, using a wet flow particle size and shape analyzer (FPIA-3000; manufactured by Malvern Panalytical Ltd.).

A method of producing the anode material according to the present embodiment is not particularly limited. From the viewpoint of efficiently producing the anode material satisfying the above described conditions, the anode material is preferably produced by a method of producing the anode material to be described later.

The anode material according to the present embodiment is appropriate as an anode material for a high capacity lithium ion secondary battery which is used in an electric vehicle (EV), a plug-in hybrid electric vehicle (PHEV), a hybrid electric vehicle (HEV), a power tool, a power storage apparatus, or the like, because of its excellent high temperature storage characteristics. In particular, the anode material according to the present embodiment is appropriate as an anode material for a lithium ion secondary battery which is used in an EV, a PHEV, an HEV, or the like, for which a capability to adapt to various environments is demanded.

< Method of Producing Anode Material for Lithium Ion Secondary Battery >

A method of producing the anode material for a lithium ion secondary battery according to the present embodiment includes subjecting a mixture containing: the first carbon material as a core; a precursor of the second carbon material having a crystallinity lower than the crystallinity of the first carbon material; and a nitrogen source, to a heat treatment.

The above described production method allows for efficiently producing the anode material according to the embodiment described above.

In the above described method, details and preferable embodiments of the first carbon material, the second carbon material and the precursor thereof are the same as those described above for the anode material for a lithium ion secondary battery.

The kind of the nitrogen source to be used in the above described method is not particularly limited. For example, the nitrogen source is preferably a substance such that nitrogen atoms and carbon atoms alone remain in the anode material after being subjected to a heat treatment. Specific examples thereof include: a nitrogen-containing cyclic organic substance, such as melamine, guanamine, N-methylpyrrolidone, pyridine, and pyrrole; a compound having an amino group, such as aniline and urea; a compound having an amide bond, such as acetamide and acetanilide; and a compound having a nitrile group, such as acetonitrile and acrylonitrile. The nitrogen source may also be a high molecular weight compound obtained using, as a raw material, the above described low molecular weight compound having a nitrogen atom. The nitrogen source may be used singly, or in a combination of two or more kinds thereof.

In the above described production method, an amount of the nitrogen source in the mixture before being subjected to the heat treatment is not particularly limited. From the viewpoint of output characteristics, it is preferable that the nitrogen source is contained in such an amount that a content of nitrogen atoms in the anode material to be produced is 0.2% by mass or more, and more preferably 0.3% by mass or more. From the viewpoint of adjusting the band gap between carbon-nitrogen bonds to an appropriate degree, and maintaining a favorable electronic conductivity, it is preferable that the nitrogen source is contained in the mixture before being subjected to a heat treatment in such an amount that the content of nitrogen atoms in the resulting anode material is 5% by mass or less, and more preferably 2% by mass or less. The content of the nitrogen source in the mixture or the content of nitrogen atoms in the resulting anode material can be determined by an inert gas fusion-thermal conductivity method (in accordance with JIS G 1228, 2006).

In the above described production method, amounts of the first carbon material and the precursor of the second carbon material in the mixture before being subjected to a heat treatment are not particularly limited. From the viewpoint of input/output characteristics of the resulting anode material, the amounts are preferably amounts such that a proportion of the second carbon material in the total mass of the resulting anode material is 0.1% by mass or more, more preferably 0.5% by mass or more, and still more preferably 1% by mass or more. From the viewpoint of preventing a decrease in the capacity, the amounts are preferably amounts such that the proportion of the second carbon material in the total mass of the resulting anode material is 30% by mass or less, more preferably 20% by mass or less, and still more preferably 10% by mass or less.

In the above described production method, the method of preparing the mixture containing the first carbon material, the precursor of the second carbon material, and the nitrogen source, is not particularly limited. Example of the method include: a method in which the first carbon material, the precursor of the second carbon material, and the nitrogen source are mixed into a solvent, followed by removing the solvent (wet mixing); a method in which the first carbon material, the precursor of the second carbon material, and the nitrogen source are mixed, each in a powder state (powder mixing); and a method in which the respective materials are mixed while applying a mechanical energy thereto (mechanical mixing).

The mixture containing the first carbon material, the precursor of the second carbon material, and the nitrogen source, is preferably in a composite state. The "composite state" refers to a state in which the respective materials are physically or chemically in contact with each other.

A temperature at which the mixture containing the first carbon material, the precursor of the second carbon material, and the nitrogen source is heat treated is not particularly limited. For example, the heat treatment temperature is preferably from 700°C to 1,500°C, more preferably from 750°C to 1,300°C, and still more preferably from 800°C to 1,100°C. From the viewpoint of allowing the precursor of the second carbon material to be sufficiently carbonized, the heat treatment temperature is preferably 700°C or higher; whereas from the viewpoint of preventing a decrease in the nitrogen content due to elimination of nitrogen, the heat treatment temperature is preferably 1,500°C or lower. The heat treatment may be carried out at a constant temperature from the start to the completion of the heat treatment, or alternatively, the temperature may be varied during the treatment.

< Anode for Lithium Ion Secondary Battery >

An anode for a lithium ion secondary battery according to the present embodiment includes: an anode material layer containing the anode material for a lithium ion secondary battery according to the embodiment described above; and a current collector. If necessary, the anode for a lithium ion secondary battery may contain other components, in addition to the current collector and the anode material layer containing the anode material described above.

The anode for a lithium ion secondary battery can be produced by, for example: kneading the anode material and a binder, along with a solvent, to prepare an anode material composition in a form of a slurry; and coating the resulting composition on a current collector to form the anode material layer, or forming the anode material composition in a form of a sheet, pellets, or the like, followed by integrating the resultant with a current collector. The kneading can be carried out using a dispersing apparatus such as an agitator, a ball mill, a super sand mill, or a pressure kneader.

The binder to be used for preparing the anode material composition is not particularly limited. Examples of the binder include: an ethylenically unsaturated carboxylic acid ester, such as a styrene-butadiene copolymer, methyl acrylate, methyl methacrylate, ethyl acrylate, ethyl methacrylate, butyl acrylate, butyl methacrylate, acrylonitrile, methacrylonitrile, hydroxyethyl acrylate, and hydroxyethyl methacrylate; an ethylenically unsaturated carboxylic acid, such as acrylic acid, methacrylic acid, itaconic acid, fumaric acid, and maleic acid; and a high molecular weight compound having a high ion conductivity, such as polyvinylidene fluoride, polyethylene oxide, polyepichlorohydrin, polyphosphazene, and polyacrylonitrile. In a case in which the anode material composition contains the binder, an amount thereof is not particularly limited. For example, the amount of the binder may be from 0.5 parts by mass to 20 parts by mass with respect to 100 parts by mass of the total amount of the anode material and the binder.

The anode material composition may contain a thickener. As the thickener, it is possible to use, for example, carboxymethyl cellulose, methyl cellulose, hydroxymethyl cellulose, ethyl cellulose, polyvinyl alcohol, polyacrylic acid or a salt thereof, oxidized starch, phosphorylated starch, casein, or the like. In a case in which the anode material composition contains the thickener, an amount thereof is not particularly limited. For example, the amount of the thickener may be from 0.1 parts by mass to 5 parts by mass with respect to 100 parts by mass of the amount of the anode material.

The anode material composition may contain a conductive auxiliary material. Examples of the conductive auxiliary material include: a carbon material, such as carbon black, graphite, and acetylene black; and a compound, such as an oxide and a nitride which exhibit electric conductivity. In a case in which the anode material composition contains the conductive auxiliary material, an amount thereof is not particularly limited. For example, the amount of the conductive auxiliary material may be from 0.5 parts by mass to 15 parts by mass with respect to 100 parts by mass of the amount of the anode material.

Materials for the current collector are not particularly limited, and can be selected from the group consisting of aluminum, copper, nickel, titanium, stainless steel, and the like. A form of the current collector is not particularly limited, and the current collector may be in a form of a foil, a perforated foil, a mesh, or the like. Further, a porous material such as a porous metal (expanded metal), a carbon paper, or the like can also be used as the current collector.

In a case in which the anode material composition is coated on the current collector to form the anode material layer, a method therefor is not particularly limited, and it is possible to use a known method, such as, for example, a metal mask printing method, an electrostatic spray painting method, a dip coating method, a spray coating method, a roll coating method, a doctor blade method, a comma coating method, a gravure coating method, or a screen printing method. After coating the anode material composition on the current collector, the solvent contained in the anode material composition is removed by drying. The drying can be carried out, for example, using a hot air dryer, an infrared dryer, or a combination of these apparatuses. If necessary, a rolling processing may be carried out. The rolling processing can be carried out by a method using a flat plate press, a calender roll, or the like.

In a case in which the anode composition formed in the form of a sheet, pellets, or the like, is integrated with the current collector to form the anode material layer, a method of integration is not particularly limited. For example, the integration can be carried out using a roll, a flat plate press, or by a combination of these means. It is preferable that the pressure to be applied during the integration is, for example, from about 1 MPa to 200 MPa.

An anode density of the anode material is not particularly limited. For example, the anode density is preferably from 1.1 $g/cm^3$ to 1.8 $g/cm^3$, more preferably from 1.2 $g/cm^3$ to 1.7 $g/cm^3$, and still more preferably from 1.3$g/cm^3$ to 1.6 $g/cm^3$. When the anode density is adjusted to 1.1 $g/cm^3$ or more, an increase in electronic resistance tends to be prevented to result in an increased capacity. When the anode density is adjusted to 1.8 $g/cm^3$ or less, decreases in rate characteristics and cycle characteristics tend to be prevented.

< Lithium Ion Secondary Battery >

A lithium ion secondary battery according to the present embodiment includes: the anode for a lithium ion secondary battery according to the embodiment described above; a cathode; and an electrolyte solution.

The cathode can be obtained in the same manner as the method of preparing the anode described above, by forming a cathode layer on a current collector. As the current collector, it is possible to use a metal or an alloy such as aluminum, titanium or stainless steel, formed in a form of a foil, a perforated foil, a mesh, or the like.

A cathode material used for forming the cathode layer is not particularly limited. Examples thereof include a metal compound (such as a metal oxide and a metal sulfide) capable of doping or intercalating lithium ions, and an electrically conductive polymer material. More specific examples thereof include: a lithium-containing compound, such as lithium cobaltate ($LiCoO_2$), lithium nickelate ($LiNiO_2$), lithium manganate ($LiMnO_2$), a complex oxide thereof ($LiCo_xNi_yMn_zO_2$, wherein x + y + z = 1), a complex oxide containing an added element M' ($LiCo_aNi_bMn_cM'_dO_2$, wherein a + b + c + d = 1, M': Al, Mg, Ti, Zr or Ge), a spinel-type lithium manganese oxide ($LiMn_2O_4$), a lithium vanadium compound, $V_2O_5$, $V_6O_{13}$, $VO_2$, $MnO_2$, $TiO_2$, $MoV_2O_8$, $TiS_2$, $V_2S_5$, $VS_2$, $MoS_2$, $MoS_3$, $Cr_3O_8$, $Cr_2O_5$, and olivine-type $LiMPO_4$ (M: Co, Ni, Mn, Fe); an electrically conductive polymer, such as polyacetylene, polyaniline, polypyrrole, polythiophene, and polyacene; and a porous carbon. The cathode material may be used singly, or in a combination of two or more kinds thereof.

The electrolyte solution is not particularly limited, and it is possible to use, for example, one obtained by dissolving a lithium salt as an electrolyte in a non-aqueous solvent (so-called an organic electrolyte solution).

Examples of the lithium salt include $LiClO_4$, $LiPF_6$, $LiAsF_6$, $LiBF_4$, and $LiSO_3CF_3$. The lithium salt may be used singly, or in a combination of two or more kinds thereof.

Examples of the non-aqueous solvent include ethylene carbonate, fluoroethylene carbonate, chloroethylene carbonate, propylene carbonate, butylene carbonate, vinylene carbonate, cyclopentanone, cyclohexylbenzene, sulfolane, propane sultone, 3-methylsulfolane, 2,4-dimethylsulfolane, 3-methyl-1,3-oxazolidin-2-one, $\gamma$-butyrolactone, dimethyl carbonate, diethyl carbonate, ethyl methyl carbonate, methylpropyl carbonate, butylmethyl carbonate, ethylpropyl carbonate, butylethyl carbonate, dipropyl carbonate, 1,2-dimethoxyethane, tetrahydrofuran, 2-methyltetrahydrofuran, 1,3-dioxolane, methyl acetate, ethyl acetate, trimethyl phosphate, and triethyl phosphate. The non-aqueous solvent may be used singly, or in a combination of two or more kinds thereof.

Forms of the cathode and the anode in the lithium ion secondary battery are not particularly limited. For example, the cathode and the anode, and if necessary, a separator disposed between the cathode and the anode, may be wound in a form of a helix, or these components may be formed in the form of flat plates and layered one on another.

The separator is not particularly limited, and it is possible to use, for example, a nonwoven fabric made of a resin, a cloth, a microporous film, or a combination thereof. Examples of the resin include a resin containing, as a main component, a polyolefin, such as polyethylene or polypropylene. In a case in which the lithium ion secondary battery to be formed has a structure in which the cathode and the anode are not directly in contact with each other, a separator is not necessarily used.

A form of the lithium ion secondary battery is not particularly limited. The lithium ion secondary battery may be, for example, a laminate-type battery, a paper-type battery, a button-type battery, a coin-type battery, a layered battery, a cylindrical battery, or a prismatic battery.

The lithium ion secondary battery according to the present embodiment is appropriate as a high capacity lithium ion secondary battery to be used in an electric vehicle, a power tool, a power storage apparatus, or the like, because of its excellent output characteristics. In particular, the lithium ion secondary battery according to the present embodiment is appropriate as a lithium ion secondary battery to be used in an electric vehicle (EV), a hybrid electric vehicle (HEV), a plug-in hybrid electric vehicle (PHEV) or the like, for which a capability to be charged and discharged at a high current is demanded in order to improve acceleration performance and brake regeneration performance.

EXAMPLES

The present invention will now be more specifically described by way of Examples. However, the present invention is in no way limited to the following Examples.

< Example 1 >

(1) Preparation of Anode Material

One hundred parts by mass of spherical natural graphite (volume average particle size: 10 $\mu$m) as the first carbon material, 10 parts by mass of coal tar pitch (softening point: 98°C, residual carbon rate: 50% by mass) as the precursor of the second carbon material, and 5 parts by mass of melamine (manufactured by Wako Pure Chemical Industries, Ltd.) as the nitrogen source were mixed to obtain a mixture. Subsequently, the mixture was subjected to a heat treatment, to prepare graphite particles on a surface of which the second carbon material had been deposited. The heat treatment was carried out by heating the mixture from 25°C to 1,000°C at a temperature increase rate of 200°C/hour, under nitrogen flow, and then maintaining the mixture at 1,000°C for one hour. The graphite particles on the surface of which the second carbon material had been deposited were cracked using a cutter mill and sieved with a 300-mesh sieve, and the resulting under-sieve fraction was used as an anode material.

The obtained anode material was subjected to an XPS analysis, the measurement of nitrogen content, the measurement of average interplanar spacing $d_{002}$, the measurement of R value, the measurement of $N_2$ specific surface area, the measurement of volume average particle size ($D_{50}$), and the measurement of circularity, according to the following methods. The results are shown in Table 1. In addition, the X-ray photoelectron spectra obtained by the XPS analysis of the anode materials prepared in Example 1 and Comparative Example 1 are shown in FIG. 1.

[XPS Analysis]

The XPS analysis was carried out using VERSA PROBE II (manufactured by ULVAC-PHI, Inc.) under the following conditions, and the number of peaks within the range of from 395 eV to 405 eV in the resulting X-ray photoelectron spectrum was counted. Further, a peak intensity ratio (A/B) of a peak intensity of a peak A to a peak intensity of a peak B was obtained, in which the peak A is a peak closer to 395 eV, and the peak B is a peak closer to 405 eV, of a peak having the maximum intensity and a peak having the second maximum intensity, within the range of from 395 eV to 405 eV.

Apparatus: PHI 5000 VERSA PROBE II, manufactured by ULVAC-PHI, Inc.
X-ray source: monochromatic Al K-L2,3 rays (1486.6 eV)
Detection angle: 45 degrees
Analysis area: 200 $\mu$m $\varphi$
X-ray beam diameter: 200 $\mu$m $\varphi$
X-ray output: 50 W, 15 kV
Pass energy C (Is): 23.5 eV; N (Is): 29.35 eV; O (Is): 29.35 eV
Neutralization gun: used
Charge correction: peak top of C (Is) was corrected to 284.8 eV

[Measurement of Nitrogen Content]

The nitrogen content was determined, using TC-600 (manufactured by LECO JAPAN LLC), by melting a sample of the anode material at 3,000°C under an inert atmosphere to generate nitrogen and determining the nitrogen content according to a thermal conductivity method.

[Measurement of Average Interplanar Spacing $d_{002}$]

The measurement of average interplanar spacing $d_{002}$ was carried out by X-ray diffractometry. Specifically, a sample of the anode material was filled into a recessed portion in a sample holder made of quartz and set to a measurement stage, and the measurement was carried out using a wide-angle X-ray diffraction apparatus (manufactured by Rigaku Corporation) under the following conditions.

Heat source: CuK alpha-ray (wavelength = 0.15418 nm)
Output: 40 kV, 20 mA
Sampling width: 0.010°
Scanning range: from 10° to 35°
Scanning speed: 0.5°/min

[Measurement of R Value]

A Raman spectroscopy measurement was carried out under the following conditions, and the intensity ratio (Id/Ig) of intensity Id, which is the intensity of the maximum peak in the vicinity of 1,360 cm$^{-1}$, to intensity Ig, which is the intensity of the maximum peak in the vicinity of 1,580 cm$^{-1}$, in the resulting Raman spectrum, was taken as the R value.
The Raman spectroscopy measurement was carried out, using a laser Raman spectrometer (model number: NRS-1000, manufactured by JASCO Corporation), by irradiating, with an argon laser beam, a sample plate in which a sample of the anode material had been set in a flat state. The measurement conditions are as follows.

Wavelength of argon laser beam: 532 nm
Wavenumber resolution: 2.56 cm$^{-1}$
Measurement range: from 1,180 cm$^{-1}$ to 1,730 cm$^{-1}$
Peak research: background removal

[Measurement of $N_2$ Specific Surface Area]

An $N_2$ specific surface area was determined, using a high speed specific surface area/ pore distribution measuring apparatus (FLOWSORB II 2300, manufactured by Tokai Riki Co., Ltd.), by measuring nitrogen adsorption at the liquid nitrogen temperature (77 K) by a multi-point method, and performing a calculation in accordance with a BET method.

[Measurement of Volume Average Particle Size (50%D)]

A solution obtained by dispersing, along with a surfactant, a sample of the anode material in purified water, was introduced into a sample tank of a laser diffraction particle size distribution measuring apparatus (SALD-3000J, manufactured by Shimadzu Corporation). Subsequently, the solution was circulated by a pump, while irradiating the solution with ultrasonic waves. The particle size ($D_{50}$) corresponding to 50% cumulative volume, in the resulting particle size distribution, was taken as the average particle size.

[Measurement of Circularity]

Into a 10 mL test tube, 5 mL of an aqueous solution containing a surfactant (brand name: LIPONOL T/15, manufactured by Lion Corporation) at a concentration in mass ratio of 0.2% was introduced, and a sample of the anode material was added to the solution so as to achieve a particle concentration of from 10,000 to 30,000. Subsequently, the test tube was stirred with a vortex mixer (manufactured by Corning Incorporated) at the number of revolution of 2,000 rpm (rotations per minute) for one minute. Immediately thereafter, the circularity of the sample was measured, using a wet flow particle size and shape analyzer (FPIA-3000; manufactured by Malvern Panalytical Ltd.). The measurement conditions are as follows.

    Measurement environment: 25°C $\pm$ 3
    Measurement mode: HPF
    Counting method: total count
    Number of valid analyses: 10,000
    Particle concentration: from 10,000 to 30,000
    Sheath liquid: particle sheath
    Objective lens: 10-fold

(2) Preparation of Lithium Ion Secondary Battery

To 98 parts by mass of the anode material, an aqueous solution (CMC concentration: 2% by mass) of CMC (CELOGEN WS-C, carboxymethyl cellulose, manufactured by DKS Co. Ltd.) as a thickener was added, so as to achieve a solid content of CMC of 1 part by mass, followed by kneading for 10 minutes. Subsequently, purified water was added to the resultant, such that the total solid concentration of the anode material and CMC was from 40% by mass to 50% by mass, followed by kneading for 10 minutes. To the resultant, an aqueous dispersion (SBR concentration: 40% by mass) of SBR (BM 400-B, manufactured by Zeon Corporation) as a binder was added, so as to achieve a solid content of SBR of 1 part by mass, followed by mixing for 10 minutes, to obtain an anode material composition in the form of a paste. Thereafter, the resulting anode material composition was coated on an electrolytic copper foil having a thickness of 11 $\mu$m, using a comma coater whose clearance had been adjusted to achieve a coating amount per unit area of 4.5 mg/cm$^2$, to form an anode layer. Thereafter, a hand press was used to adjust the electrode density to 1.5 g/cm$^3$. The electrolytic copper foil on which the anode layer had been formed was punched in the shape of a disk having a diameter of 14 mm, to prepare a sample electrode (anode).
The prepared sample electrode (anode), a separator, and a counter electrode (cathode) were placed in this order into a coin type battery container, followed by introducing an electrolyte solution thereinto, to prepare a coin-type lithium ion secondary battery. As the electrolyte solution, one obtained by dissolving LiPF$_6$ in a mixed solvent of ethylene carbonate (EC) and methylethyl carbonate (MEC) (volume ratio of EC to MEC = 3:7) so as to achieve a concentration of 1.0 mol/L, was used. As the counter electrode (cathode), metal lithium was used. As the separator, a porous film made of polyethylene and having a thickness of 20 $\mu$m was used. Using the prepared lithium ion secondary battery, evaluations of initial charge-discharge characteristics, output characteristics, and high temperature storage characteristics were carried out, according to the following methods.

[Evaluation of Initial Charge-discharge Characteristics]

    (1) Charging was carried out, at a constant current of 0.48 mA, to 0 V (V vs. Li/Li$^+$). Subsequently, charging was carried out, at a constant voltage of 0 V, to a current value of 0.048 mA. The capacity at this time was taken as an initial charge capacity.
    (2) After 30 minutes of down time, discharging was carried out, at a constant current of 0.48 mA, to 1.5 V (V vs. Li/Li$^+$). The capacity at this time was taken as an initial discharge capacity.
    (3) The initial charge-discharge efficiency was determined from the charge and discharge capacities obtained in the above described (1) and (2), according to the following (Formula 1).

$$\text{Initial charge-discharge efficiency (\%)} = \{(\text{initial discharge capacity (mAh)})/(\text{initial charge capacity (mAh)})\} \times 100 \quad \text{(Formula 1)}$$

[Evaluation of Output Characteristics]

(1) Charging was carried out, at a constant current of 0.48 mA, to 0 V (V vs. Li/Li$^+$). Subsequently, charging was carried out, at a constant voltage of 0 V, to a current value of 0.048 mA.
(2) After 30 minutes of down time, discharging was carried out, at a constant current of 0.48 mA, to 1.5 V (V vs. Li/Li$^+$).
(3) Operations described in (1) and (2) were carried out again, and the discharge capacity at this time was taken as a "discharge capacity 1" (mAh).
(4) After 30 minutes of down time, charging was carried out, at a constant current of 0.48 mA, to 0 V (V vs. Li/Li$^+$). Subsequently, charging was carried out, at a constant voltage of 0 V, to a current value of 0.048 mA.
(5) After 30 minutes of down time, discharging was carried out, at a constant current of 12 mA, to 1.5 V (V vs. Li/Li$^+$), and the discharge capacity at this time was taken as a "discharge capacity 2" (mAh).
(6) The output characteristics were determined from the discharge capacities obtained in (3) and (5), according to the following (Formula 2).

$$\text{Output characteristics (\%)} = \{(\text{discharge capacity 2 (mAh)})/(\text{discharge capacity 1 (mAh)})\} \times 100 \quad \text{(Formula 2)}$$

[Evaluation of High Temperature Storage Characteristics]

(1) Charging was carried out, at a constant current of 0.48 mA, to 0 V (V vs. Li/Li$^+$). Subsequently, charging was carried out, at a constant voltage of 0 V, to a current value of 0.048 mA.
(2) After 30 minutes of down time, discharging was carried out, at a constant current of 0.48 mA, to 1.5 V (V vs. Li/Li$^+$).
(3) After 30 minutes of down time, charging was carried out, at a constant current of 0.48 mA, to 0 V (V vs. Li/Li$^+$). The charge capacity (mAh) at this time was measured.
(4) The battery after being subjected to (3) was left to stand for five days at 60°C.
(5) Discharging was carried out, at a constant current of 0.48 mA, to 1.5 V (V vs. Li/Li$^+$). The discharge capacity (mAh) at this time was measured.
(6) The high temperature storage characteristics were determined from the charge capacity obtained in (3) and the discharge capacity obtained in (5), according to the following Formula 3.

$$\text{High temperature storage characteristics (\%)} = \{(\text{discharge capacity (mAh)})/(\text{charge capacity (mAh)})\} \times 100 \quad \text{Formula 3}$$

< Example 2 >

One hundred parts by mass of spherical natural graphite (volume average particle size: 10 $\mu$m) as the first carbon material, 10 parts by mass of coal tar pitch (softening point: 98°C, residual carbon rate: 50% by mass) as the precursor of the second carbon material, and 5 parts by mass of melamine as the nitrogen source were mixed to obtain a mixture. Subsequently, the mixture was introduced into an apparatus which includes rotor blades within a cylinder, and in which materials are combined into a composite by being rubbed and kneaded between the inner wall of the cylinder and the rotor blades, and then sealed. The apparatus was operated at a load of 24 kW for five minutes to allow the mixture to be combined into a composite. Thereafter, in the same manner as in Example 1, the heat treatment and particle sizing were carried out to prepare an anode material and a lithium ion secondary battery. The properties of the resulting anode material and lithium ion secondary battery were evaluated in the same manner as in Example 1. The results are shown in Table 1.

< Example 3 >

An anode material and a lithium ion secondary battery were prepared in the same manner as in Example 1, except that the amount of melamine was changed to 10 parts by mass. The properties of the resulting anode material and lithium ion secondary battery were evaluated in the same manner as in Example 1. The results are shown in Table 1.

< Example 4 >

An anode material and a lithium ion secondary battery were prepared in the same manner as in Example 1, except that 20 parts by mass of polyacrylonitrile was used as the nitrogen source. The properties of the resulting anode material and lithium ion secondary battery were evaluated in the same manner as in Example 1. The results are shown in Table 1.

< Example 5 >

An anode material and a lithium ion secondary battery were prepared in the same manner as in Example 1, except that 10 parts by mass of urea was used as the nitrogen source. The properties of the resulting anode material and lithium ion secondary battery were evaluated in the same manner as in Example 1. The results are shown in Table 1.

< Example 6 >

An anode material and a lithium ion secondary battery were prepared in the same manner as in Example 1, except that 10 parts by mass of pyrrole was used as the nitrogen source. The properties of the resulting anode material and lithium ion secondary battery were evaluated in the same manner as in Example 1. The results are shown in Table 1.

< Example 7 >

An anode material and a lithium ion secondary battery were prepared in the same manner as in Example 1, except that the volume average particle size of the spherical natural graphite as the first carbon material was changed from 10 $\mu$m to 5 $\mu$m. The properties of the resulting anode material and lithium ion secondary battery were evaluated in the same manner as in Example 1. The results are shown in Table 1.

< Example 8 >

An anode material and a lithium ion secondary battery were prepared in the same manner as in Example 1, except that the volume average particle size of the spherical natural graphite as the first carbon material was changed from 10 $\mu$m to 15 $\mu$m. The properties of the resulting anode material and lithium ion secondary battery were evaluated in the same manner as in Example 1. The results are shown in Table 1.

< Example 9 >

An anode material and a lithium ion secondary battery were prepared in the same manner as in Example 1, except that 30 parts by mass of polyvinyl alcohol (residual carbon rate: 15% by mass) was used as the precursor of the second carbon material. The properties of the resulting anode material and lithium ion secondary battery were evaluated in the same manner as in Example 1. The results are shown in Table 1.

< Example 10 >

An anode material and a lithium ion secondary battery were prepared in the same manner as in Example 1, except that the temperature (maximum) of the heat treatment was changed from 1,000°C to 800°C. The properties of the resulting anode material and lithium ion secondary battery were evaluated in the same manner as in Example 1. The results are shown in Table 1.

< Example 11 >

An anode material and a lithium ion secondary battery were prepared in the same manner as in Example 1, except that the temperature (maximum) of the heat treatment was changed from 1,000°C to 1,300°C. The properties of the resulting anode material and lithium ion secondary battery were evaluated in the same manner as in Example 1.

The results are shown in Table 1.

< Example 12 >

One hundred parts by mass of spherical natural graphite (volume average particle size: 10 $\mu$m) as the first carbon material, 10 parts by mass of coal tar pitch (softening point: 98°C, residual carbon rate: 50% by mass) as the precursor of the second carbon material, 2 parts by mass of commercially available Ketjen Black (manufactured by Lion Specialty Chemicals Co., Ltd.) as the second carbon material, and 5 parts by mass of melamine (manufactured by Wako Pure Chemical Industries, Ltd.) as the nitrogen source were mixed to obtain a mixture. The obtained mixture was introduced into an apparatus for combining materials into composite ("NOB-300", manufactured by Hosokawa Micron Ltd.), which includes rotor blades within a cylinder. The above described apparatus was operated at a load of 24 kW for five minutes to allow materials to be rubbed and kneaded between the inner wall and the rotor blades, thereby obtaining a mixture. Subsequently, the mixture was subjected to a heat treatment, to prepare graphite particles on a surface of which the second carbon material had been deposited. The heat treatment was carried out by heating the mixture from 25°C to 1,000°C at a temperature increase rate of 200°C/hour, under nitrogen flow, and then maintaining the mixture at 1,000°C for one hour. The graphite particles on the surface of which the second carbon material had been deposited were cracked using a cutter mill and sieved with a 300-mesh sieve, and the resulting under-sieve fraction was used as an anode material. The properties of the resulting anode material and lithium ion secondary battery were evaluated in the same manner as in Example 1. The results are shown in Table 1.

< Example 13 >

An anode material and a lithium ion secondary battery were prepared in the same manner as in Example 12, except that acetylene black (manufactured by Denka Company Limited) was used as the second carbon material, instead of the Ketjen Black, with an amount of the acetylene black that was used being the same as that of the Ketjen Black that was used in Example 12. The properties of the resulting anode material and lithium ion secondary battery were evaluated in the same manner as in Example 1. The results are shown in Table 1.

< Example 14 >

Coal-based coal tar was subjected to a heat treatment at 400°C, using an autoclave, to obtain green coke. The resulting green coke was ground, and then calcined at 1,200°C in an inert atmosphere, to obtain lump coke. The obtained lump coke was ground using an impact grinder equipped with a classifier, and then sieved with a 300-mesh sieve to remove coarse powder, to obtain a first carbon phase (volume average particle size: 15 $\mu$m). One hundred parts by mass the resulting first carbon phase, 10 parts by mass of coal tar pitch (softening point: 98°C, residual carbon rate:50% by mass) as the precursor of the second carbon material, and 5 parts by mass of melamine as the nitrogen source were mixed to obtain a mixture. Subsequently, the mixture was subjected to a heat treatment, to prepare graphite particles on a surface of which the second carbon material had been deposited. The heat treatment was carried out by heating the mixture from 25°C to 1,000°C at a temperature increase rate of 200°C/hour, under nitrogen flow, and then maintaining the mixture at 1,000°C for one hour. The graphite particles on the surface of which the second carbon material had been deposited were cracked using a cutter mill and sieved with a 300-mesh sieve, and the resulting under-sieve fraction was used as an anode material. The properties of the resulting anode material and lithium ion secondary battery were evaluated in the same manner as in Example 1. The results are shown in Table 1.

< Example 15 >

An anode material and a lithium ion secondary battery were prepared in the same manner as in Example 12, except that the volume average particle size was changed from 15 $\mu$m to 3 $\mu$m. The properties of the resulting anode material and lithium ion secondary battery were evaluated in the same manner as in Example 1. The results are shown in Table 1.

< Example 16 >

An anode material and a lithium ion secondary battery were prepared in the same manner as in Example 1, except that the volume average particle size of the spherical natural graphite as the first carbon material was changed from 10 $\mu$m to 20 $\mu$m. The properties of the resulting anode material and lithium ion secondary battery were evaluated in the same manner as in Example 1. The results are shown in Table 1.

< Comparative Example 1 >

One hundred parts by mass of spherical natural graphite (average particle size: 10 μm) as the first carbon material, and 5 parts by mass of melamine as the nitrogen source were mixed to obtain a mixture. Subsequently, the mixture was subjected to a heat treatment, to prepare graphite particles which had deposited to a surface. The heat treatment was carried out by heating the mixture from 25°C to 1,000°C at a temperature increase rate of 200°C/hour, under nitrogen flow, and then maintaining the mixture at 1,000°C for one hour. The obtained graphite particles were cracked using a cutter mill and sieved with a 300-mesh sieve, and the resulting under-sieve fraction was used as an anode material. Using the anode material, a lithium ion secondary battery was prepared in the same manner as in Example 1. The properties of the resulting anode material and lithium ion secondary battery were evaluated in the same manner as in Example 1. The results are shown in Table 1. In addition, the spectrum of XPS is shown in FIG. 1.

< Comparative Example 2 >

One hundred parts by mass of spherical natural graphite (volume average particle size: 10 μm) as the first carbon material, and 10 parts by mass of a pitch prepared from polyvinyl chloride as the precursor of the second carbon material were mixed to obtain a mixture. Subsequently, the mixture was subjected to a heat treatment, to prepare graphite particles on a surface of which the second carbon material had been deposited. The heat treatment was carried out by heating the mixture from 25°C to 1,000°C at a temperature increase rate of 200°C/hour, under argon gas flow, and then maintaining the mixture at 1,000°C for one hour. The graphite particles on the surface of which the second carbon material had been deposited were cracked using a cutter mill and sieved with a 300-mesh sieve, and the resulting under-sieve fraction was used as an anode material. Using the anode material, a lithium ion secondary battery was prepared in the same manner as in Example 1. The properties of the resulting anode material and lithium ion secondary battery were evaluated in the same manner as in Example 1. The results are shown in Table 1.

< Comparative Example 3 >

An anode material and a lithium ion secondary battery were prepared in the same manner as in Example 1, except that the heat treatment was carried out by heating the mixture up to 1800°C at a temperature increase rate of 200°C/hour, and then maintaining the mixture at 1,800°C for one hour. The properties of the resulting anode material and lithium ion secondary battery were evaluated in the same manner as in Example 1. The results are shown in Table 1.

< Comparative Example 4 >

Coal-based coal tar was subjected to a heat treatment at 400°C, using an autoclave, to obtain green coke. The resulting green coke was ground, and then calcined at 1,200°C in an inert atmosphere, to obtain lump coke. The obtained lump coke was ground using an impact grinder equipped with a classifier, and then sieved with a 300-mesh sieve to remove coarse powder, to obtain a first carbon phase (volume average particle size: 15 μm). One hundred parts by mass the resulting first carbon phase, and 10 parts by mass of coal tar pitch (softening point: 98°C, residual carbon rate: 50% by mass) as the precursor of the second carbon material were mixed to obtain a mixture. Subsequently, the mixture was subjected to a heat treatment, to prepare graphite particles on a surface of which the second carbon material had been deposited. The heat treatment was carried out by heating the mixture from 25°C to 1,000°C at a temperature increase rate of 200°C/hour, under nitrogen flow, and then maintaining the mixture at 1,000°C for one hour. The graphite particles on the surface of which the second carbon material had been deposited were cracked using a cutter mill and sieved with a 300-mesh sieve, and the resulting under-sieve fraction was used as an anode material. The properties of the resulting anode material and lithium ion secondary battery were evaluated in the same manner as in Example 1. The results are shown in Table 1.

[Table 1]

| Items | Number of XPS peaks | XPS peak intensity ratio | Nitrogen content (% by mass) | Average interplanar spacing $d_{002}$ (nm) | R Value | $N_2$ Specific surface area ($m^2/g$) | Volume average particle size (μm) | Initial discharging capacity (Ah/kg) | Initial charge-discharge efficiency (%) | Output characteristics (%) | High temperature storage characteristics (%) | Circularity |
|---|---|---|---|---|---|---|---|---|---|---|---|---|
| Example 1 | 2 | 0.7 | 0.4 | 0.3358 | 0.4 | 4.3 | 10 | 363 | 92 | 98 | 93 | 0.94 |
| Example 2 | 2 | 0.8 | 0.5 | 0.3357 | 0.5 | 4.5 | 10 | 362 | 91 | 93 | 92 | 0.92 |
| Example 3 | 2 | 1.0 | 1.0 | 0.3356 | 0.5 | 4.3 | 11 | 360 | 92 | 97 | 92 | 0.94 |
| Example 4 | 2 | 0.3 | 0.3 | 0.3358 | 0.3 | 4.4 | 10 | 362 | 92 | 97 | 93 | 0.93 |
| Example 5 | 2 | 0.3 | 0.4 | 0.3356 | 0.3 | 4.7 | 11 | 361 | 91 | 96 | 93 | 0.93 |
| Example 6 | 2 | 0.5 | 0.4 | 0.3360 | 0.4 | 4.5 | 10 | 364 | 91 | 95 | 91 | 0.93 |
| Example 7 | 2 | 0.8 | 0.6 | 0.3357 | 0.6 | 4.8 | 7 | 362 | 93 | 98 | 93 | 0.92 |
| Example 8 | 2 | 0.6 | 0.4 | 0.3361 | 0.4 | 3.3 | 16 | 361 | 94 | 91 | 96 | 0.94 |
| Example 9 | 2 | 0.7 | 0.5 | 0.3359 | 0.3 | 6.8 | 10 | 360 | 89 | 96 | 93 | 0.93 |
| Example 10 | 2 | 0.8 | 0.8 | 0.3358 | 0.5 | 5.2 | 10 | 363 | 90 | 97 | 90 | 0.93 |
| Example 11 | 2 | 0.3 | 0.3 | 0.3358 | 0.4 | 4.9 | 10 | 362 | 94 | 96 | 95 | 0.94 |
| Example 12 | 2 | 0.5 | 0.5 | 0.3356 | 0.6 | 7.0 | 11 | 360 | 89 | 99 | 91 | 0.91 |
| Example 13 | 2 | 0.7 | 0.4 | 0.3356 | 0.5 | 6.2 | 10 | 361 | 90 | 98 | 92 | 0.91 |
| Example 14 | 2 | 0.5 | 0.5 | 0.3511 | 0.9 | 2.4 | 15 | 238 | 88 | 96 | 87 | 0.87 |
| Example 15 | 2 | 0.6 | 0.4 | 0.3515 | 1.0 | 7.2 | 5 | 234 | 85 | 98 | 84 | 0.84 |
| Example 16 | 2 | 0.6 | 0.4 | 0.3360 | 0.4 | 3.0 | 20 | 361 | 94 | 90 | 97 | 0.94 |
| Comparative Example 1 | 0 | - | < 0.1 | 0.3358 | 0.2 | 10.2 | 11 | 362 | 86 | 78 | 82 | 0.94 |
| Comparative Example 2 | 0 | - | < 0.1 | 0.3360 | 0.4 | 4.0 | 10 | 361 | 92 | 82 | 92 | 0.93 |
| Comparative Example 3 | 1 | - | < 0.1 | 0.3359 | 0.2 | 3.9 | 10 | 361 | 93 | 80 | 95 | 0.93 |
| Comparative Example 4 | 0 | - | < 0.1 | 0.3509 | 1.0 | 2.1 | 15 | 237 | 82 | 95 | 79 | 0.87 |

EP 3 454 400 A1

17

As can be seen from the results shown in Table 1, the lithium ion secondary batteries prepared using the anode materials of Examples have excellent output characteristics and high temperature storage characteristics, as compared to the lithium ion secondary batteries prepared using the anode materials of Comparative Examples.

The disclosure of Japanese Patent Application No. 2016-092585 is incorporated herein by reference in their entirety. All publications, patent applications, and technical standards mentioned in the present specification are incorporated herein by reference to the same extent as if such individual publication, patent application, or technical standard was specifically and individually indicated to be incorporated by reference.

**Claims**

1. An anode material for a lithium ion secondary battery, the anode material comprising:

   a first carbon material as a core; and
   a second carbon material present on at least a part of a surface of the first carbon material, and having a crystallinity lower than a crystallinity of the first carbon material;
   wherein the anode material has at least two peaks within a range of from 395 eV to 405 eV in an X-ray photoelectron spectrum thereof.

2. An anode material for a lithium ion secondary battery,
   wherein the anode material has an R value of from 0.1 to 1.0, and has at least two peaks within a range of from 395 eV to 405 eV in an X-ray photoelectron spectrum thereof.

3. The anode material for a lithium ion secondary battery according to claim 1 or 2, wherein the at least two peaks comprise a peak within a range of 395 eV or more but less than 400 eV, and a peak within a range of from 400 eV to 405 eV.

4. The anode material for a lithium ion secondary battery according to any one of claims 1 to 3, wherein the at least two peaks comprise a peak in a vicinity of 398 eV, and a peak in a vicinity of 401 eV.

5. The anode material for a lithium ion secondary battery according to any one of claims 1 to 4, wherein a peak intensity ratio (A/B) of a peak intensity of a peak A to a peak intensity of a peak B is from 0.1 to 10, wherein the peak A is a peak closer to 395 eV, and the peak B is a peak closer to 405 eV, of a peak having a maximum intensity and a peak having a second maximum intensity, among the peaks present within the range of from 395 eV to 405 eV in the X-ray photoelectron spectrum.

6. An anode material for a lithium ion secondary battery, wherein the anode material comprises bonds between carbon atoms and nitrogen atoms, and the carbon atoms and the nitrogen atoms are bonded in two or more types of bonding states.

7. The anode material for a lithium ion secondary battery according to claim 6, wherein the anode material comprises a nitrogen atom bonded to three carbon atoms and a nitrogen atom bonded to two carbon atoms.

8. The anode material for a lithium ion secondary battery according to any one of claims 1 to 7, wherein the anode material has a content of nitrogen atoms of 0.2% by mass or more.

9. The anode material for a lithium ion secondary battery according to any one of claims 1 to 8, wherein the anode material has an average interplanar spacing ($d_{002}$), as measured by X-ray diffractometry, of 0.340 nm or less.

10. The anode material for a lithium ion secondary battery according to any one of claims 1 to 9, wherein the anode material has a volume average particle size ($D_{50}$) of from 1 $\mu$m to 40 $\mu$m.

11. The anode material for a lithium ion secondary battery according to any one of claims 1 to 10, wherein the anode material has a specific surface area, as measured by nitrogen adsorption at 77 K, of from 0.5 $m^2$/g to 10 $m^2$/g.

12. A method of producing the anode material for a lithium ion secondary battery according to any one of claims 1 to 11, the method comprising subjecting a mixture containing: the first carbon material as a core; a precursor of the second carbon material having the crystallinity lower than the crystallinity of the first carbon material; and a nitrogen source, to a heat treatment.

13. The method of producing the anode material for a lithium ion secondary battery according to claim 12, wherein the nitrogen source is contained in the mixture in such an amount that a content of nitrogen atoms in the anode material for a lithium ion secondary battery is 0.2% by mass or more.

14. The method of producing the anode material for a lithium ion secondary battery according to claim 12 or 13, wherein the first carbon material and the precursor of the second carbon material are contained in the mixture in such amounts that a proportion of the second carbon material in a total mass of the anode material for a lithium ion secondary battery is from 0.1% by mass to 30% by mass.

15. The method of producing the anode material for a lithium ion secondary battery according to any one of claims 12 to 14, wherein the heat treatment is carried out at a temperature of from 700°C to 1,500°C.

16. An anode for a lithium ion secondary battery, the anode comprising:

an anode material layer containing the anode material for a lithium ion secondary battery according to any one of claims 1 to 11; and
a current collector.

17. A lithium ion secondary battery, comprising:

the anode for a lithium ion secondary battery according to claim 16;
a cathode; and
an electrolyte solution.

FIG.1

## INTERNATIONAL SEARCH REPORT

| International application No. |
| --- |
| PCT/JP2017/017101 |

**A. CLASSIFICATION OF SUBJECT MATTER**
*H01M4/587*(2010.01)i, *C01B32/20*(2017.01)i, *H01M4/133*(2010.01)i, *H01M4/36* (2006.01)i, *H01M10/0525*(2010.01)i, *H01M10/0566*(2010.01)i

According to International Patent Classification (IPC) or to both national classification and IPC

**B. FIELDS SEARCHED**

Minimum documentation searched (classification system followed by classification symbols)
H01M4/587, C01B32/20, H01M4/133, H01M4/36, H01M10/0525, H01M10/0566

Documentation searched other than minimum documentation to the extent that such documents are included in the fields searched
| | | | |
| --- | --- | --- | --- |
| Jitsuyo Shinan Koho | 1922–1996 | Jitsuyo Shinan Toroku Koho | 1996–2017 |
| Kokai Jitsuyo Shinan Koho | 1971–2017 | Toroku Jitsuyo Shinan Koho | 1994–2017 |

Electronic data base consulted during the international search (name of data base and, where practicable, search terms used)
JSTPlus(JDreamIII)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2001-039705 A  (Sanyo Electric Co., Ltd.), 13 February 2001 (13.02.2001), | 1-9,11-14, 16,17 |
| Y | paragraphs [0113], [0139] & US 6869546 B1 column 13, lines 46 to 51; column 16, lines 46 to 63 | 1-8,11-13, 15-17 |
| X | JP 2009-117334 A  (Hitachi Chemical Co., Ltd.), 28 May 2009 (28.05.2009), | 1-8,10-13, 15-17 |
| Y | paragraphs [0065] to [0084] (Family: none) | 1-8,11-13, 15-17 |

[X] Further documents are listed in the continuation of Box C.    [ ] See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 26 June 2017 (26.06.17) | 04 July 2017 (04.07.17) |

| Name and mailing address of the ISA/ Japan Patent Office 3-4-3,Kasumigaseki,Chiyoda-ku, Tokyo 100-8915,Japan | Authorized officer Telephone No. |
| --- | --- |

Form PCT/ISA/210 (second sheet) (January 2015)

**INTERNATIONAL SEARCH REPORT**

International application No.

PCT/JP2017/017101

C (Continuation).   DOCUMENTS CONSIDERED TO BE RELEVANT

| Category* | Citation of document, with indication, where appropriate, of the relevant passages | Relevant to claim No. |
|---|---|---|
| X<br>Y | WO 2012/157590 A1 (Mitsubishi Chemical Corp.), 22 November 2012 (22.11.2012), paragraphs [0143] to [0173] & US 8936876 B2 column 28, line 41 to column 35, line 37 & EP 2709195 A1     & CN 103518279 A & KR 10-2014-0024369 A | 1-8,10-17<br>1-8,11-13, 15-17 |
| X<br>Y | WO 2008/123380 A1 (Asahi Kasei Chemicals Corp.), 16 October 2008 (16.10.2008), paragraphs [0082] to [0109], [0232] to [0272]; fig. 2 & US 2010/0159346 A1 paragraphs [0167] to [0208], [0400] to [0469]; fig. 2 & CN 101641810 A | 2-8,16,17<br>1-8,11-13, 15-17 |
| Y | JP 2013-530039 A (Bayer Intellectual Property GmbH), 25 July 2013 (25.07.2013), paragraphs [0021] to [0031]; fig. 2b & US 2013/0157843 A1 paragraphs [0024] to [0033]; fig. 2b & WO 2011/157800 A1     & EP 2397439 A1 & CN 103118974 A | 1-8,11-13, 15-17 |
| Y | JP 2014-216283 A (Toyota Central Research and Development Laboratories, Inc.), 17 November 2014 (17.11.2014), paragraphs [0016] to [0022] (Family: none) | 1-8,11-13, 15-17 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H04370662 A
- JP H05307956 A

- JP 2016092585 A